# EUROPEAN PATENT APPLICATION

(11) **EP 4 371 745 A1**
(43) Date of publication of application: **22.05.2024**
(21) Application number: 21950222.6
(22) Date of filing: 16.07.2021
(51) Int. Cl.: B29C 69/02, F16J 15/10

(54) **MOLDING METHOD**

(71) Applicant: Kokoku Intech Co., Ltd., Taito-ku Tokyo 110-0015 (JP)
(72) Inventor: MORI Keisuke, Utsunomiya-shi, Tochigi 321-0905 (JP); HIRAYAMA Kouji, Utsunomiya-shi, Tochigi 321-0905 (JP)
(74) Representative: Balder IP Law, S.L.
(86) International application number: PCT/JP2021/026895
(87) International publication number: WO 2023/286286

(57) **Abstract**

There is provided a molding method capable of reducing damage or deformation of a base material when a seal member is molded in a direction intersecting an uneven portion of the base material. A molding method includes: a preforming step of injecting a rubber material into a groove 462 at a temperature where the rubber material is not crosslinked, in a cavity plate 410 including the groove 462 into which the rubber material is injected; and a vulcanization molding step of sandwiching a base material 300 between the cavity plate 410 in which the rubber material is injected into the groove 462 and a mold 420, and molding the rubber material onto the base material 300 as a seal member 172 at a temperature where the rubber material is crosslinked. At least a surface 422 of the mold 420 facing a recess 334 and a protrusion 332 of the base material 300 is a flat surface when viewed in a cross-section at a position separated by a predetermined distance from a molding position of the seal member 172 in an X direction substantially orthogonal to a Y direction in which the seal member 172 extends.

## Description

### TECHNICAL FIELD

The present invention relates to a molding method for molding a seal member onto a base material.

### BACKGROUND ART

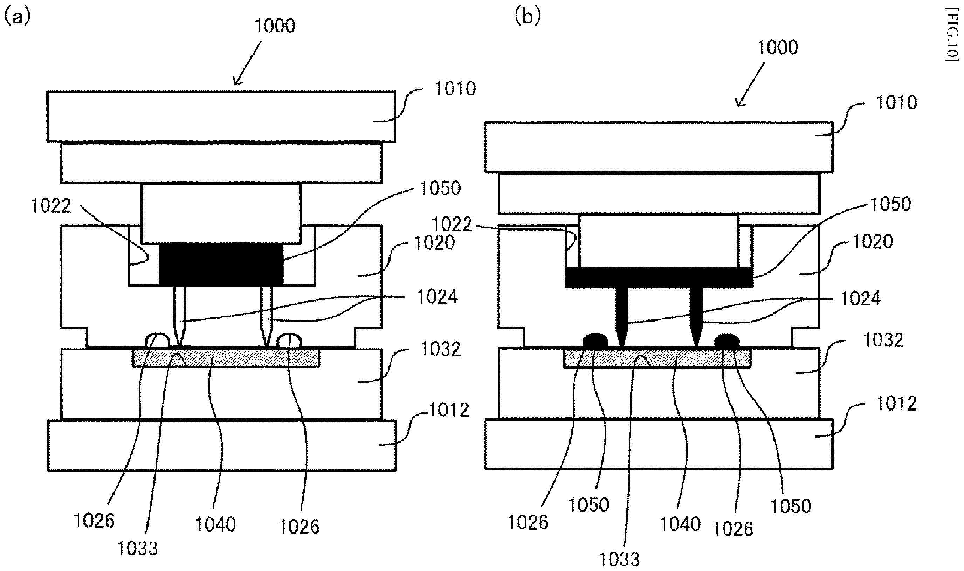

In the related art, a molding method for molding a seal member such as rubber onto a base material such as metal, resin, or paper has been proposed. Fig. 10 is a cross-sectional view of a molding machine 1000 that performs transfer molding of the related art, Fig. 10(a) is a view showing a state where a rubber material 1050 is charged into a pot 1022 of the molding machine 1000, and Fig. 10(b) is a view showing a state where mold clamping and the injection of the rubber material 1050 are performed in the molding machine 1000. The molding machine 1000 includes heating plates 1010 and 1012 and molds 1020 and 1032. The mold 1020 includes the pot 1022 into which the rubber material 1050 is charged; a groove 1026 for molding a seal member onto a base material 1040; and a gate 1024 for injecting the rubber material 1050 into the groove 1026. The mold 1032 includes a recess 1033 in which the base material 1040 is disposed. The molding machine 1000 applies, for example, a pressure (hereinafter, referred to as an injection pressure) of 1 MPa to 200 MPa to the rubber material 1050 by clamping the molds after the rubber material 1050 is charged and the base material 1040 is disposed, and the rubber material 1050 is injected into the groove 1026. The molding machine 1000 molds the seal member onto the base material 1040 such as a separator by crosslinking the rubber material 1050 using, for example, heat at 80°C to 220°C generated by the heating plate 1010.

In addition, for example, Patent Document 1 discloses a method for manufacturing a gasket-integrated plate used for a separator for a fuel cell, a top cover of a hard disk drive, and the like. Incidentally, there is a base material including not only a flat plate but also recesses and/or protrusions (hereinafter, referred to as an uneven portion), and both surfaces of the base material are used as surfaces in contact with gas or liquid. In such a base material, the seal member may be molded to intersect the uneven portion. When the seal member is molded onto the base material including the uneven portion, the mold presses the base material with clearances provided in the uneven portion.

### CITATION LIST

### PATENT DOCUMENT

Patent Document 1: JP 2004-225721 A

### SUMMARY OF THE INVENTION

### PROBLEM TO BE SOLVED BY THE INVENTION

However, in the molding method of the related art, since a raw material for the seal member flows into the clearance portion and burrs occur, in addition to the injection pressure, a large mold clamping pressure for suppressing the occurrence of burrs is also required. Accordingly, damage or deformation of the base material, a deterioration in surface state, or the like occurs at portions where the uneven portion of the base material and the molds come into contact with each other, which is a risk. For this reason, when the seal member is molded in the direction intersecting the uneven portion of the base material, reducing damage, deformation, or the like of the base material is required.

The present invention has been made in view of the above-described circumstances, and an exemplary object of the present invention is to provide a molding method capable of reducing damage or deformation of a base material when a seal member is molded in a direction intersecting an uneven portion of the base material.

### MEANS FOR SOLVING THE PROBLEM

In order to solve the above-described problems, the present invention has the following configurations. (1) A molding method for molding a seal member onto a base material including a recess and a protrusion such that the recess or the protrusion and the seal member intersect each other when the seal member is molded onto the base material, includes: a first step of injecting a raw material for the seal member into a groove at a temperature where the raw material is not crosslinked, in a first mold including the groove into which the raw material is injected; and a second step of sandwiching the base material between the first mold in which the raw material is injected into the groove and a second mold, and molding the raw material onto the base material as the seal member at a temperature where the raw material is crosslinked. At least a surface of the first mold and/or the second mold facing the recess and the protrusion is a flat surface when viewed in a cross-section at a position separated by a predetermined distance from a molding position of the seal member in a second direction substantially orthogonal to a first direction in which the seal member extends.

Further objects or other characteristics of the present invention will become apparent by preferred embodiments that will be described below with reference to the accompanying drawings.

### ADVANTAGEOUS EFFECTS OF THE INVENTION

According to the present invention, it is possible to provide the molding method capable of reducing damage or deformation of the base material when the seal member is molded in a direction intersecting an uneven portion of the base material.

### BRIEF DESCRIPTION OF THE DRAWINGS

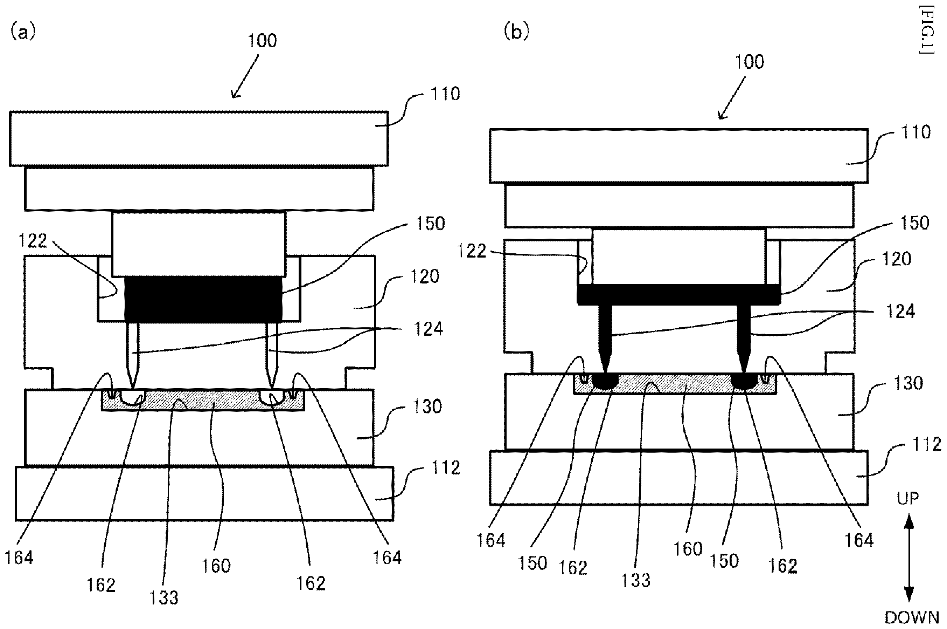

Fig. 1 is a cross-sectional view showing a preforming step of an embodiment, Fig. 1(a) is a view showing a state where a rubber material is charged into a pot of a forming machine, and Fig. 1(b) is a view showing a state where mold clamping and the injection of the rubber material are performed in the forming machine;

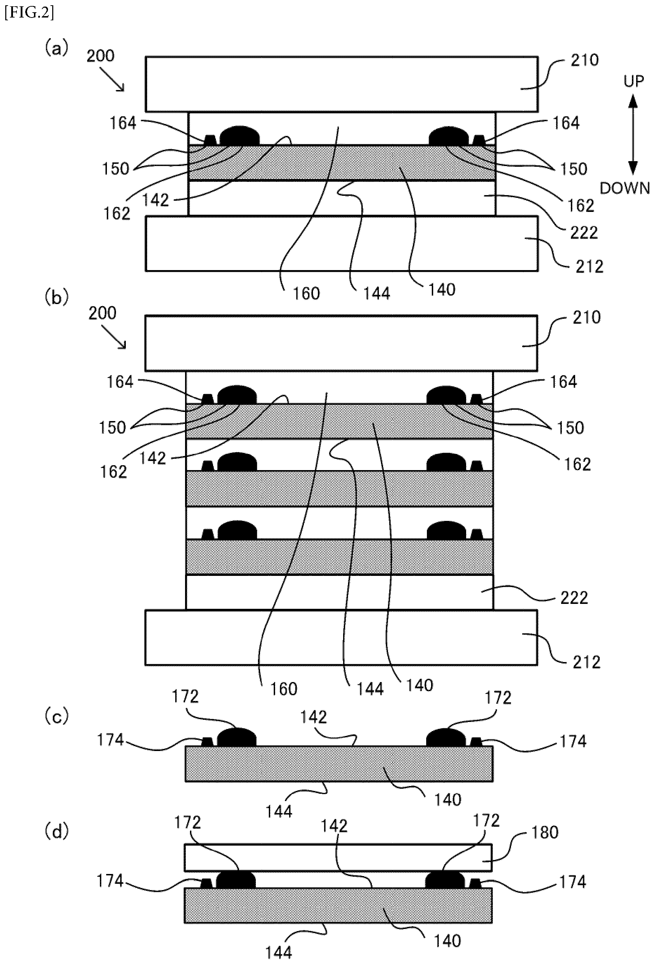

Fig. 2 is a cross-sectional view showing main parts of a molding machine in a vulcanization molding step of the embodiment, Fig. 2(a) is a view showing a state where one pair of a cavity plate and a base material are disposed in the molding machine, Fig. 2(b) is a view showing a state where a plurality of pairs of the cavity plates and the base materials are disposed in the molding machine, Fig. 2(c) is a cross-sectional view showing the base material after molding, and Fig. 2(d) is a view showing a state where an inner region of the base material is sealed by a plate;

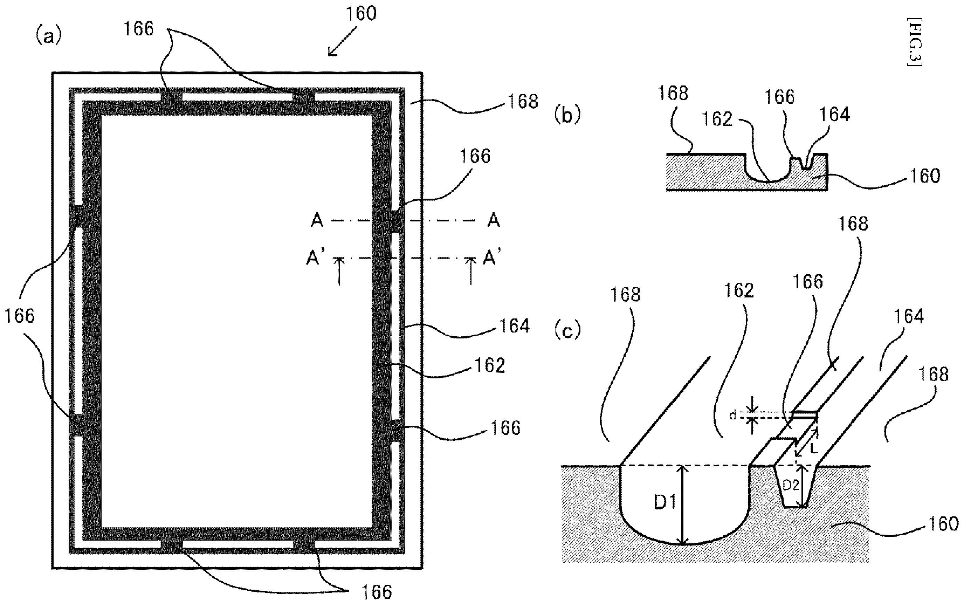

Fig. 3 is a view showing a configuration of the cavity plate of the embodiment, Fig. 3(a) is a view showing a surface of the cavity plate on which a groove is provided, Fig. 3(b) is a cross-sectional view taken along line A-A in Fig. 3(a), and Fig. 3(c) is a perspective view of a cross-section along line A'-A' in Fig. 3(a);

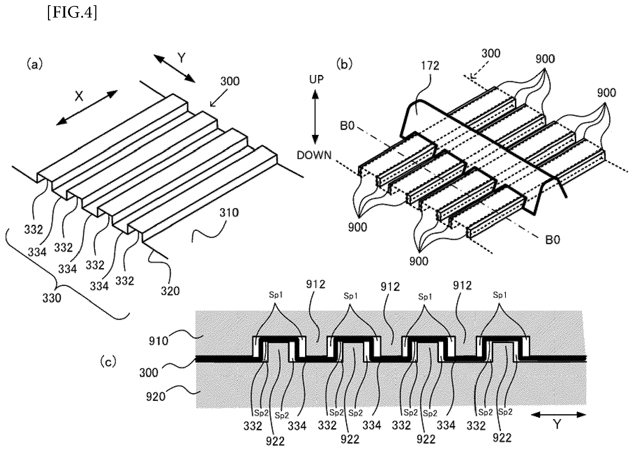

Fig. 4 is a view for comparison with the first embodiment, Fig. 4(a) is a perspective view of main parts showing a base material including an uneven portion, Fig. 4(b) is a perspective view of main parts showing burrs when a seal member is molded by a molding method of the related art, and Fig. 4(c) is a cross-sectional view of main parts of a mold (upper mold), the base material, and a mold (lower mold) during a molding step of the related art corresponding to a cross-section B0-B0 in Fig. 4(b);

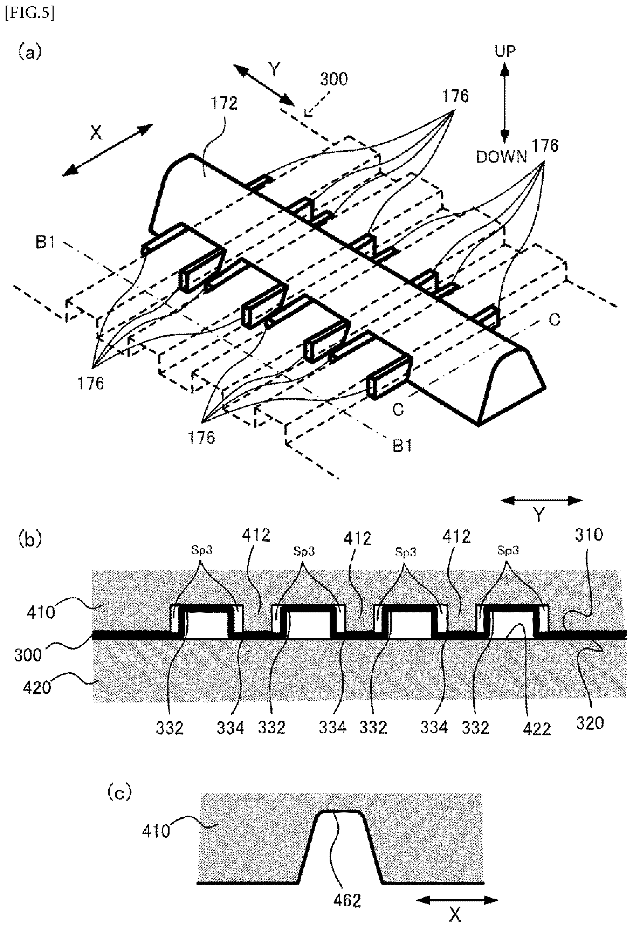

Fig. 5 is a perspective view of main parts showing a case where the seal member is molded on the base material in the preforming step and the vulcanization molding step of the first embodiment, Fig. 5(a) is a perspective view of main parts showing the base material and the seal member when a cavity plate without an escape groove is used, Fig. 5(b) is a perspective view of main parts showing the cavity plate, the base material, and a mold (lower mold) during the vulcanization molding step corresponding to a cross-section B1-B1 in Fig. 5(a), and Fig. 5(c) is a cross-sectional view of main parts showing the cavity plate corresponding to a cross-section C-C in Fig. 5(a);

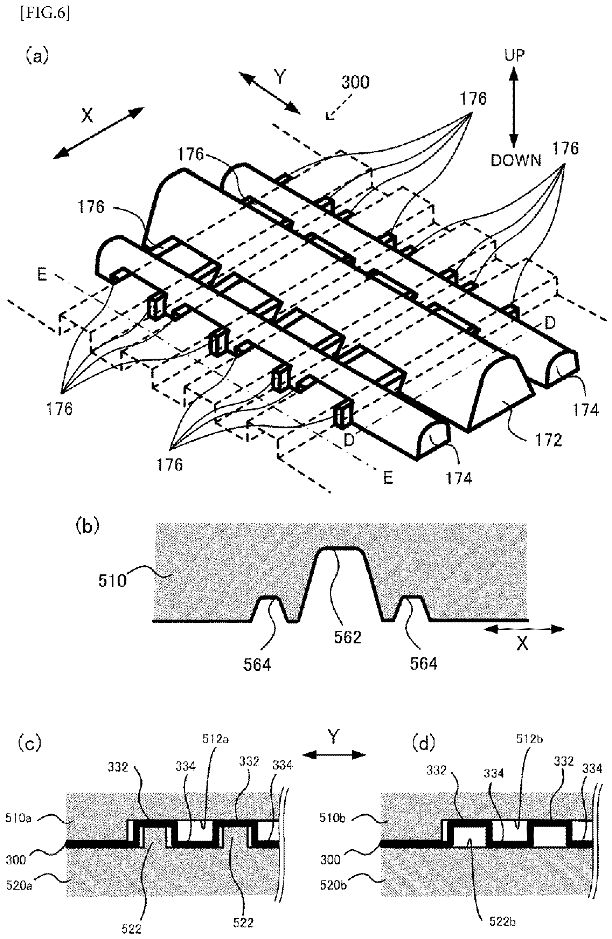

Fig. 6 is a perspective view of main parts showing a case where the seal member is molded on the base material in a preforming step and a vulcanization molding step of a second embodiment, Fig. 6(a) is a perspective view of main parts showing the base material, the seal member, and side lips when a cavity plate including an escape groove is used, Fig. 6(b) is a cross-sectional view of main parts showing the cavity plate corresponding to a cross-section D-D in Fig. 6(a), and Figs. 6(c) and 6(d) are cross-sectional views of main parts showing modification examples of the cavity plate and the mold corresponding to a cross-section E-E in Fig. 6(a);

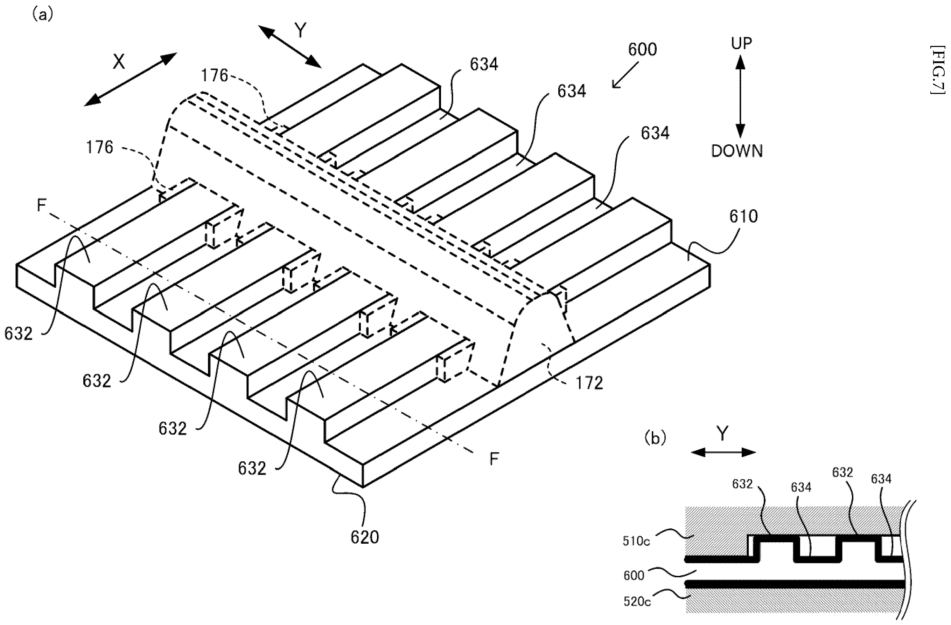

Fig. 7(a) is a view showing a modification example of the base material of the first and second embodiments, and Fig. 7(b) is a cross-sectional view of main parts showing one example of a cavity plate and molds corresponding to a cross-section F-F in Fig. 7(a);

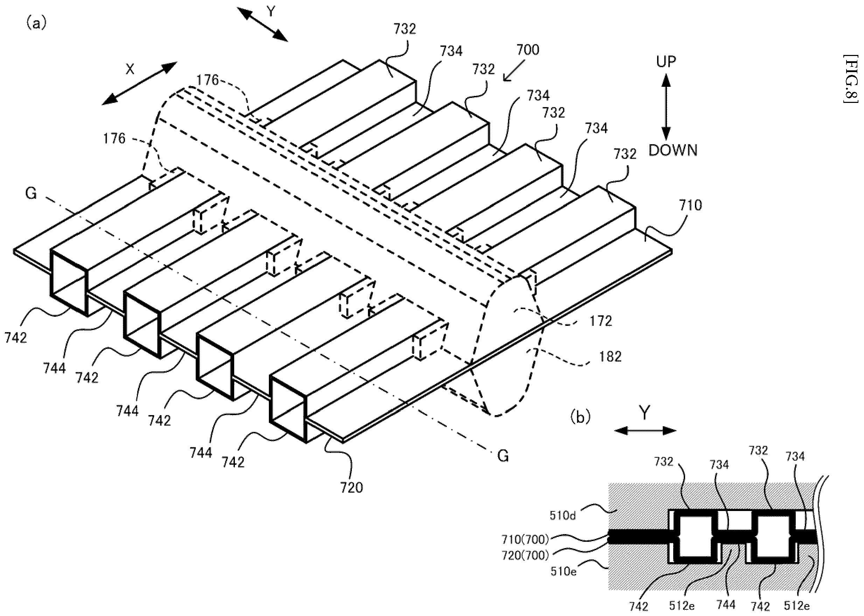

Fig. 8(a) is a view showing a modification example of the base material of the first and second embodiments, and Fig. 8(b) is a cross-sectional view of main parts showing one example of two cavity plates corresponding to a cross-section G-G in Fig. 8(a);

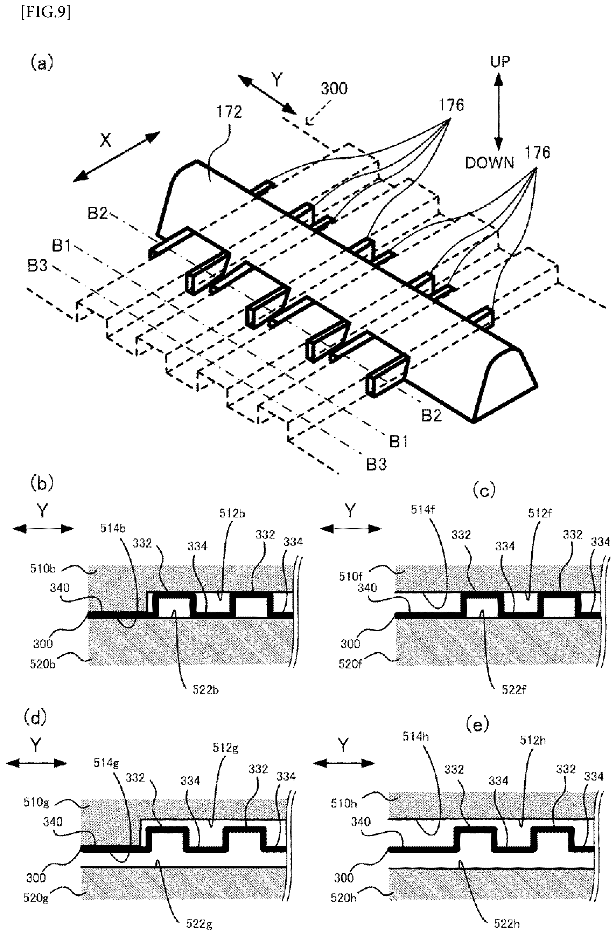

Fig. 9(a) is a view showing the position of a cross-section of a base material in a third embodiment, and Figs. 9(b) to 9(e) are views showing various combinations of cavity plates (upper molds) and molds (lower molds); and
Fig. 10 is a cross-sectional view of a molding machine in an example of the related art, Fig. 10(a) is a view showing a state where a rubber material is charged into a pot of the molding machine, and Fig. 10(b) is a view showing a state where mold clamping and the injection of the rubber material are performed in the molding machine.

### DESCRIPTION OF THE EMBODIMENTS

Hereinafter, embodiments will be described with reference to the drawings. Here, the term "forming" refers to a step of shaping rubber in an uncrosslinked state regardless of the use of molds, and the term "molding" refers to a step of shaping rubber (crosslinked rubber) by using molds and performing a crosslinking reaction.

### [Embodiment]

### <Flow until base material with seal member is completed>

A basic flow of a molding method of the present embodiment will be described. When the seal member is, for example, rubber, materials for a rubber material are mixed and kneaded. Examples of the rubber used include thermosetting elastic bodies such as fluororubber, EPDM, NBR, CR, silicone, thermoplastic elastic bodies, thermoplastic resins, and the like. Next, vulcanization promoter mixing is performed on the kneaded materials. Here, vulcanization promoter mixing refers to adding, mixing, and kneading a vulcanization accelerator and a vulcanizing agent with a rubber compound. Incidentally, the material in a state where rubber used as a raw material and a compounding agent such as a filler and a crosslinking agent (vulcanizing agent) are uniformly mixed is also referred to as a rubber compound (rubber material). Next, the rubber material on which vulcanization promoter mixing is performed is dispensed and formed, and then the rubber material is injected into a groove of a cavity plate to be described later at a predetermined pressure, and is formed in an unvulcanized (uncrosslinked) state. In the following description, a step of performing forming in an unvulcanized (uncrosslinked) state is referred to as a preforming step.

In the preforming step, vulcanization (crosslinking) is performed in a state where the cavity plate into which the rubber is injected and a base material are laminated to form a pair. In the following description, a step of performing vulcanization (crosslinking) is referred to as a vulcanization molding step. Incidentally, the vulcanization molding step also includes a case where a substance used as a raw material for the seal member is molded onto the base material at a vulcanization (crosslinking) temperature. After the vulcanization (crosslinking) is completed, and for example, secondary vulcanization is performed on the base material onto which the seal member is transferred (molded), finally, finishing, inspection, and the like are performed, a series of work is completed, and the base material with the seal member is completed as a product.

### (Preforming step)

The preforming step that is a first step will be described. Fig. 1 is a cross-sectional view showing a forming machine 100 in the preforming step of the present embodiment, Fig. 1(a) is a view showing a state where a rubber material 150 that is a raw material for the seal member formed onto the base material is charged into a pot 122 of the forming machine 100, and Fig. 1(b) is a view showing a state where the rubber material 150 is injected into a groove 162 of a cavity plate 160 in the forming machine 100. In Fig. 1, an up-down direction is indicated by a double-headed arrow. Incidentally, in Figs. 1 to 3, for the sake of description, it is assumed that the base material is a flat plate and the cavity plate 160 of which the shape is determined according to the base material is a flat plate.

The forming machine 100 includes heating plates 110 and 112 and molds 120 and 130. The mold 120 includes the pot 122 into which the rubber material 150 is charged, and a gate 124 for injecting the rubber material 150 into the groove 162 of the cavity plate 160. The mold 130 includes a recess 133 in which the cavity plate 160 is disposed.

The cavity plate 160 that is a first mold includes the groove 162 into which the rubber material 150 is injected, and a groove (hereinafter, referred to as an escape groove) 164 for the escape of the rubber material 150 from the groove 162 in the preforming step or the vulcanization molding step. In addition, the cavity plate 160 also includes connecting grooves (not shown) to be described later.

In the forming machine 100, as shown in Fig. 1(a), the rubber material 150 is charged into the pot 122, and the cavity plate 160 is disposed in the recess 133 of the mold 130. Incidentally, it is assumed that positioning between the mold 120 (gate 124) and the mold 130 (the groove 162 of the cavity plate 160) is performed by a known method or the like. Thereafter, as shown in Fig. 1(b), a pressure (hereinafter, also referred to as a mold clamping pressure) is applied to the molds 120 and 130 to clamp the molds, and a pressure for injecting the rubber material 150 from the pot 122 via the gate 124 is applied to inject the rubber material 150 into the groove 162 of the cavity plate 160. The pressure required when injecting the rubber material 150 is referred to as an injection pressure, and is, for example, 1 to 200 MPa. In addition, the temperature of heat generated in the heating plates 110 and 112 during mold clamping shown in Fig. 1(b) is a temperature where the rubber material 150 is not vulcanized (crosslinked) (in other words, unvulcanized (uncrosslinked)) (the substance used as a raw material for the seal member is not crosslinked) and fluidity is maintained. For example, in the present embodiment, the preforming step is performed at a temperature of 80°C. In this respect, the preforming step can also be referred to as an unvulcanized forming step. Incidentally, the temperature in the preforming step is not limited to 80°C, and is set depending on, for example, the viscosity of the rubber material 150. The filling rate of the rubber material 150 into the groove 162 of the cavity plate 160 is, for example, 90% to 110%; however, the filling rate is also not limited to this value.

### (Vulcanization molding step)

The vulcanization molding step that is a second step will be described. Fig. 2 is a cross-sectional view showing main parts of a molding machine 200 in the vulcanization molding step of the present embodiment, Fig. 2(a) is a view showing a state where one pair of the cavity plate 160 and a base material 140 are disposed in the molding machine 200, Fig. 2(b) is a view showing a state where a plurality of pairs (for example, three pairs) of the cavity plates 160 and the base materials 140 are disposed in the molding machine 200, Fig. 2(c) is a cross-sectional view showing the base material 140 after molding, and Fig. 2(d) is a view showing a state where an inner region of the base material 140 is sealed by a plate 180. In Fig. 2, the up-down direction is indicated by a double-headed arrow. Incidentally, since a second pair and a third pair have the same configuration as a first pair in Fig. 2(b), reference signs are omitted.

The molding machine 200 includes heating plates 210 and 212 and a second mold 222 (hereinafter, simply referred to as the mold 222). The base material 140 is, for example, metal, resin, or paper. The base material 140 has a surface 142 onto which a seal member 172 is formed, and a surface 144 opposite to the surface 142. The cavity plate 160 in which the rubber material 150 is injected into the groove 162 in the preforming step is aligned with the surface 142 of the base material 140, and the mold 222 is aligned with the surface 144. Namely, the base material 140 is sandwiched between the cavity plate 160 as a mold and the mold 222. Incidentally, it is assumed that positioning between the cavity plate 160 (the groove 162 filled with the rubber material 150) and the base material 140 is performed by a known method or the like.

In this state, heating is performed by the heating plates 210 and 212 at a temperature where the rubber material 150 is vulcanized (crosslinked) (a substance used as a raw material for the seal member is crosslinked), for example, at 120°C to 220°C, and a predetermined pressure (for example, 5 MPa) is applied in the up-down direction. Here, since the injection of the rubber material 150 into the groove 162 is completed in the preforming step, the predetermined pressure does not include the injection pressure but only the mold clamping pressure. In other words, the injection pressure in the vulcanization molding step is 0 MPa. In addition, when the predetermined pressure and heat are applied, the rubber material 150 in the groove 162 escapes into the escape groove 164 via the connecting grooves (not shown) to be described later. Incidentally, the rubber material 150 in the groove 162 may escape to the escape groove 164 during the preforming step.

Incidentally, Fig. 2(a) shows an example in which the vulcanization molding step is performed on one pair of the cavity plate 160 and the base material 140; however, the present invention is not limited thereto. For example, as shown in Fig. 2(b), molding may be performed on a plurality of pairs, for example, three pairs of the cavity plates 160 and the base materials 140 in one vulcanization molding step. In addition, in Fig. 2, the cavity plate 160 is at the top and the base material 140 is at the bottom; however, the top and bottom may be reversed. When the top and bottom are reversed, the mold 222 becomes an upper mold.

As described above, as shown in Fig. 2(c), the rubber material 150 injected into the groove 162 of the cavity plate 160 is transferred (molded) onto the surface 142 of the base material 140 as the seal member 172. In addition, as shown in Fig. 2(d), by aligning the plate 180 to face the surface 142 of the base material 140 on which the seal member 172 is molded, the inner region is sealed by the seal member 172. For example, gas, liquid, or the like is retained in the sealed region. Incidentally, hereinafter, a vulcanized (crosslinked) portion of the rubber material 150 that has escaped to the escape groove 164 is referred to as a side lip 174. Here, in Figs. 1 and 2, the seal member 172 is provided on the surface 142 of the base material 140; however, the seal member 172 may be provided on the surface 144 of the base material 140 or both surfaces (the surface 142 and the surface 144) of the base material 140.

### (Cavity plate)

A configuration of the cavity plate 160 will be described. Fig. 3 is a view showing a configuration of the cavity plate 160, Fig. 3(a) is a view showing a surface (hereinafter, referred to as a touch surface) 168 of the cavity plate 160 on which the groove 162 is provided, Fig. 3(b) is a cross-sectional view taken along line A-A in Fig. 3(a), and Fig. 3(c) is a perspective view of a cross-section along line A'-A' in Fig. 3(a). The cavity plate 160 includes the groove 162, the escape groove 164, and connecting grooves 166.

As described above, the groove 162 is a groove into which the rubber material 150 is injected. For example, in the present embodiment, it is assumed that the base material 140 has a rectangular shape having two long sides and two short sides and the seal member is molded into a rectangular frame shape along end portions of the base material 140. For this reason, as shown in Fig. 3(a), similarly, the groove 162 of the cavity plate 160 is also provided in a rectangular frame shape. The groove 162 has a predetermined depth D1 (refer to Fig. 3(c)). The depth D1 of the groove 162 determines a height of the seal member molded onto the base material 140. Incidentally, the molding position, length, and width of the seal member on the base material 140 are determined depending on the purpose of use of the base material 140 and/or the seal member, and are not limited to a shape and the like shown in Fig. 3.

The escape groove 164 is provided parallel to and spaced apart from the groove 162, but may not be parallel thereto. The escape groove 164 is a groove for the escape of surplus rubber when the rubber material 150 injected into the groove 162 in the vulcanization molding step (or the preforming step) expands during heating, exceeds the volume of the groove 162, and becomes surplus. Namely, the occurrence of burrs after the vulcanization molding step can be suppressed by providing the escape groove 164. As shown in Fig. 3(a), for example, in the present embodiment, the escape groove 164 is provided between the groove 162 and four sides (end portions) of the cavity plate 160. In the present embodiment, the escape groove 164 is continuously provided, and similarly to the groove 162, has a rectangular frame shape.

Incidentally, the escape groove 164 may be provided discontinuously. In addition, the escape groove 164 is provided at a position where the purpose of use of the base material 140 on which the seal member 172 is molded is not hindered. For example, in the case of the base material 140 onto which the seal member 172 is molded using the cavity plate 160 in Fig. 3(a), the seal member 172 is molded to retain sealability of a region inside the seal member 172 molded by the groove 162. For this reason, in the cavity plate 160, the escape groove 164 is provided at a position corresponding to a region outside the seal member 172 (namely, the end portions of the base material 140), which does not require the retention of sealability.

The escape groove 164 has a predetermined depth D2 (refer to Fig. 3(c)). The depth D2 of the escape groove 164 determines a height of the side lip 174. Here, the depth D2 of the escape groove 164 is shallower than the depth D1 of the groove 162 (D2 < D1). In other words, the height of the side lip 174 is lower than the height of the seal member 172. This is intended to retain sealability of the region inside the seal member 172 when the plate 180 is aligned with the base material 140 by making the height of the seal member 172 higher than the height of the side lip 174 (refer to Fig. 2(d)). The depth D2 of the escape groove 164, whether the escape groove 164 is continuous or discontinuous, or the length, width, shape, and the like when the escape groove 164 is discontinuous are not limited to those shown in Fig. 3, and may be set depending on the purpose of use of the base material 140 and/or the seal member 172 or the viscosity, injection amount, injection pressure, and the like of the rubber material 150.

The connecting grooves 166 are grooves through which the rubber material 150 expanded by heat in the vulcanization molding step (or the preforming step) escapes into the escape groove 164. The connecting grooves 166 have, for example, a depth d of approximately 0.005 mm to approximately 0.2 mm and a length L of approximately 1 to 6 mm, and are formed to be lower than the touch surface 168. Here, the length L is a length in a direction parallel to the groove 162. Incidentally, the depth d of the connecting grooves 166 is shallower than the depth D1 of the groove 162 and the depth D2 of the escape groove 164 (d < D2 < D1) .

As shown in Fig. 3(a), the connecting grooves 166 are discretely provided between the groove 162 and the escape groove 164. The positions where the connecting grooves 166 are provided, the number, width (in other words, a distance between the groove 162 and the escape groove 164), the length L, and the depth d of the connecting grooves 166 may be set depending on the purpose of use of the base material 140 and/or the seal member 172, the configurations of the groove 162 and the escape groove 164, the viscosity of the rubber material 150, the position of the gate 124, or the like.

For example, metals such as iron, SUS, aluminum, and copper that can withstand a temperature during vulcanization (hereinafter, referred to as a vulcanization (crosslinking) temperature) in the vulcanization molding step and that have good thermal conductivity are suitable for the material of the cavity plate 160. In addition, as the material of the cavity plate 160, for example, ceramic, resin, or the like can also be used as long as these materials satisfy the above-described conditions. In addition, it is assumed that the cavity plate 160 has such a thickness that deformation is prevented and rigidity is maintained in the preforming step and the vulcanization molding step.

Since the volumes of the groove 162 and the escape groove 164 of the cavity plate 160 are known values at the time of designing the cavity plate 160, the amount of surplus rubber can be controlled by the escape groove 164, and the occurrence of burrs can be reduced. In addition, since the injection of the rubber material 150 is performed in the preforming step, no injection pressure is applied when the rubber material 150 is molded onto the base material 140 in the vulcanization molding step. For this reason, deformation or damage of the base material 140 caused by the injection pressure can be reduced. In addition, since the injection pressure is not applied in the vulcanization molding step, the pressure added to the mold clamping pressure to suppress the occurrence of burrs in the related art can be reduced. Further, for example, gate marks remain in transfer molding, injection molding, or the like; however, in the preforming step of the present embodiment, since the rubber material 150 is injected into the groove 162 of the cavity plate 160 in an unvulcanized state, gate marks can be reduced or eliminated.

### <Regarding base material having uneven shape and molding method of related art>

For comparison with the first embodiment, a base material including recesses and/or protrusions (here, referred to as an uneven portion) and a molding method of the related art will be described using Fig. 4. Fig. 4(a) is a perspective view of main parts showing a base material 300 including an uneven portion, Fig. 4(b) is a perspective view of main parts showing burrs 900 when the seal member 172 is molded by the molding method of the related art, and Fig. 4(c) is a cross-sectional view of main parts of a mold 910 (upper mold), the base material 300, and a mold 920 (lower mold) during a molding step of the related art corresponding to a cross-section B0-B0 in Fig. 4(b). Incidentally, in Fig. 4(b), the base material 300 is shown by dashed lines to make the drawing easier to read. In addition, the up-down direction is indicated by a double-headed arrow.

The base material 300 has a surface 310 and a surface 320. Here, the surface 310 is a surface onto which the seal member 172 is molded, and the surface 320 is a surface onto which the seal member is not molded, and is a surface opposite to the surface 310. In the following description, the up-down direction or recesses and protrusions are defined in a state where the base material 300 is disposed such that the surface 320 is located on the lower side and the surface 310 is located on the upper side.

The base material 300 includes, for example, four protrusions 332 and three recesses 334, and the protrusions 332 and the recesses 334 are consecutively and alternately provided. Incidentally, when the base material 300 is viewed from a surface 320 side, the protrusions 332 become recesses, and the recesses 334 become protrusions. Hereinafter, the protrusions 332 and the recesses 334 may be collectively referred to as an uneven portion 330. A direction parallel to a longitudinal direction of the uneven portion 330 is an X direction (second direction), and a direction substantially orthogonal to the X direction is a Y direction (first direction). It is assumed that the base material 300 actually extends in the X direction and the Y direction. The uneven portion 330 of the base material 300 may be used as a flow path for gas or liquid, and the gas or liquid may flow on a surface 310 side or flow on the surface 320 side. Namely, both surfaces (the surface 310 and the surface 320) of the base material 300 may be used to realize the purpose of use of a product.

When the seal member 172 is molded to intersect the uneven portion 330, for example, to be substantially orthogonal thereto, problems in the case of using the molding method of the related art (for example, transfer molding, injection molding, or the like) will be described. As described in Fig. 10, in the molding method of the related art, when the rubber material 1050 is injected by applying the injection pressure is applied thereto, the rubber material 1050 is injected into the groove 1026. In Fig. 10, a description is given using the base material 1040 that is flat; however, when mold clamping is performed with the base material 300 including the uneven portion 330 as shown in Fig. 4(a) sandwiched between two molds, the shapes of the two molds are shapes corresponding to the uneven portion 330 of the base material 300. The mold 910 (also an upper mold) shown in Fig. 4(c) is a mold having a shape corresponding to the uneven portion 330 of the base material 300. The mold 920 (also a lower mold) shown in Fig. 4(c) is a mold having a shape corresponding to the uneven portion 330 of the base material 300. Incidentally, it is assumed that the mold 910 includes a groove (not shown in Fig. 4(c)) for molding the seal member 172 as in the mold 1020 in Fig. 10.

Further, the mold 910 and the mold 920 include respective pressing portions for pressing the uneven portion 330 of the base material 300. The mold 910 includes pressing portions 912, the number of which corresponds to the number of the recesses 334 (for example, three), and the mold 920 includes pressing portions 922, the number of which corresponds to the number of the protrusions 332 (for example, four). As shown in Fig. 4(c), the pressing portions 912 are provided such that a length (hereinafter, referred to as a width) of the pressing portions 912 of the mold 910 in the Y direction is smaller than a width of the recesses 334 of the base material 300 in the Y direction. This is intended to prevent the base material 300 from being affected even when an error occurs in positioning between the mold 910 and the base material 300 in the Y direction. Namely, the mold 910 has clearances Sp1 in the Y direction with respect to the uneven portion 330 of the base material 300. Similarly, the pressing portions 922 are provided such that a width of the pressing portions 922 of the mold 920 in the Y direction is smaller than a width of the protrusions 332 of the base material 300 in the Y direction. This is intended to prevent the base material 300 from being affected even when an error occurs in positioning between the mold 920 and the base material 300 in the Y direction. Namely, the mold 920 has clearances Sp2 in the Y direction with respect to the uneven portion 330 of the base material 300.

In the molding method of the related art, the injection pressure and the mold clamping pressure are applied during molding, and the rubber material 1050 injected into the groove (not shown) of the mold 910 flows into the clearances Sp1 to form the burrs 900 that are large along the X direction of the uneven portion 330 as shown in Fig. 4(b).

### <Regarding molding method of first embodiment>

### (When the cavity plate does not include an escape groove)

A molding method of the first embodiment will be described using Fig. 5. Incidentally, since a configuration of the base material 300 including the uneven portion 330 is the same as described in Fig. 4(a), the description thereof will be omitted. Fig. 5 is a perspective view of main parts showing a case where the seal member 172 is molded on the base material 300 in the preforming step and the vulcanization molding step of the first embodiment. Fig. 5(a) is a perspective view of main parts showing the base material 300 and the seal member 172 when a cavity plate 410 without an escape groove is used, Fig. 5(b) is a perspective view of main parts showing the cavity plate 410, the base material 300, and a mold 420 (lower mold) during the vulcanization molding step corresponding to a cross-section B1-B1 in Fig. 5(a), and Fig. 5(c) is a cross-sectional view of main parts showing the cavity plate 410 corresponding to a cross-section C-C in Fig. 5(a). In Fig. 5(a), the base material 300 is shown by dashed lines to make the drawing easier to read. In addition, the up-down direction is indicated by a double-headed arrow.

A cavity plate 410 that is a first mold includes a groove 462 and pressing portions 412. The groove 462 is a groove into which the rubber material 150 is injected to form the seal member 172 in the preforming step. The pressing portions 412 are portions that press the uneven portion 330 of the base material 300 in the vulcanization molding step, and similarly to the mold 910 in Fig. 4(c), are provided to create clearances Sp3 between the pressing portions 412 and the base material 300. Namely, a width of the pressing portions 412 in the Y direction is smaller than the width of the recesses 334 of the base material 300 in the Y direction. The cavity plate 410 does not include an escape groove and a connecting groove.

In this manner, even when the cavity plate 410 does not include an escape groove and a connecting groove, the rubber that becomes larger than the volume of the groove 462 due to expansion by heat during the vulcanization molding step escapes into the clearances Sp3. Namely, the clearances Sp3 are made to function similarly to the escape groove 164 described in Fig. 3. Hereinafter, the rubber that has escaped into the clearances Sp3 is referred to as side lips 176. In the first embodiment, since the injection of the rubber material 150 is performed in the preforming step, no injection pressure is applied during the vulcanization molding step. Accordingly, the large burrs 900 as shown in Fig. 4(b) of the related art do not occur.

In addition, a mold 420 that is a second mold has a surface 422, and at least a portion of the surface 422 facing the uneven portion 330 of the base material 300 is a flat surface. Incidentally, a portion of the mold 420 facing portions of the base material 300 other than the uneven portion 330 is also a flat surface. In the first embodiment, since the preforming step and the vulcanization molding step are separated and no injection pressure is applied during the vulcanization molding step, the mold 420 (lower mold) does not need to include pressing portions corresponding to the pressing portions 922 of the mold 920 in Fig. 4. For this reason, the seal member 172 can be molded onto the surface 310 of the base material 300 without the surface 320 (surface onto which the seal member 172 is not molded) side of the protrusions 332 of the base material 300 coming into contact with the mold 420. Accordingly, damage, deformation, or the like of the uneven portion 330 of the base material 300 can be reduced. In addition, since no friction occurs between the surface 320 of the base material 300 and the mold 420, no scratches or the like due to friction of the surface 320 side of the protrusions 332 occur, and the surface state does not deteriorate. Accordingly, when the surface 320 of the protrusions 332 of the base material 300 is used as a flow path for gas or liquid, the flow of the gas or liquid is not hindered.

Incidentally, in the first embodiment, the seal member 172 is molded in the Y direction substantially orthogonal to (approximately 90 degrees) the X direction that is a direction in which the uneven portion 330 of the base material 300 extends; however, the present invention is not limited thereto, and can be applied to a case where the seal member 172 is molded to intersect the uneven portion 330 (in other words, in a direction not parallel to the uneven portion 330).

As described above, according to the first embodiment, it is possible to provide the molding method capable of reducing damage or deformation of the base material when the seal member is molded in the direction intersecting the uneven portion of the base material.

### [Second Embodiment]

A second embodiment will be described. Incidentally, Figs. 1 to 3 described in the first embodiment are the same for the second embodiment, the same reference signs are used, and the description thereof will be omitted.

### (When a cavity plate includes an escape groove)

Fig. 6 is a perspective view of main parts showing a case where the seal member 172 is molded on the base material 300 in a preforming step and a vulcanization molding step of the second embodiment Fig. 6(a) is a perspective view of main parts showing the base material 300, the seal member 172, and the side lips 174 when a cavity plate 510 including escape grooves 564 is used, and Fig. 6(b) is a cross-sectional view of main parts showing the cavity plate 510 corresponding to a cross-section D-D in Fig. 6(a). Figs. 6(c) and 6(d) are cross-sectional views of main parts showing modification examples of the cavity plate and the mold corresponding to a cross-section E-E in Fig. 6(a). In Fig. 6(a), the base material 300 is shown by dashed lines to make the drawing easier to read. In addition, the up-down direction is indicated by a double-headed arrow.

A cavity plate 510 that is a first mold includes a groove 562, escape grooves 564, and pressing portions (not shown). The groove 562 is a groove into which the rubber material 150 is injected to form the seal member 172 in the preforming step. The pressing portions (not shown) have the same configuration as the pressing portions 412 described in Fig. 5, and the description thereof will be omitted. The escape grooves 564 are grooves for the escape of the rubber material 150 overflowing from the groove 562 in the vulcanization molding step (or the preforming step).

In this manner, when the cavity plate 510 includes the escape grooves 564, the rubber that becomes larger than the volume of the groove 562 due to expansion by heat or the like during the vulcanization molding step first escapes into the escape grooves 564 via clearances between the pressing portions (not shown) and the uneven portion 330 of the base material 300. For this reason, the amount of the rubber escaping in a direction away from the escape groove 564 can be reduced along the clearance opposite to the groove 562 with reference to the escape groove 564. Here, similarly to Fig. 5, the rubber that has escaped into the clearances is referred to as the side lips 176. Some of the side lips 176 depicted in Fig. 6(a) are not labeled with the reference sign; however, all the rubber portions extending in the X direction between the seal member 172 and the side lips 174 are the side lips 176. Incidentally, the cavity plate 510 may include connecting grooves, and since the connecting grooves in this case have the same configuration as the connecting grooves 166 described in Fig. 3, the description thereof will be omitted.

In the second embodiment as well, since the injection of the rubber material 150 is performed in the preforming step, no injection pressure is applied during the vulcanization molding step. Accordingly, the large burrs 900 as shown in Fig. 4(b) of the related art do not occur. In addition, in the second embodiment as well, since the preforming step and the vulcanization molding step are separated and no injection pressure is applied during the vulcanization molding step, a mold (lower mold) (not shown) does not need to include pressing portions. A configuration of the mold (lower mold) is the same configuration as the mold 420 in Fig. 5(b). Namely, since a cross-sectional view corresponding to a cross-section of the mold (lower mold) along line E-E is also the same as Fig. 5(b) that is a cross-sectional view corresponding to the cross-section B1-B1 in Fig. 5(a), the description thereof will be omitted.

Incidentally, in Fig. 6, the escape grooves 564 are provided on both sides of the groove 562 in the X direction; however, the present invention is not limited thereto. The number, position, length (length in the Y direction), width (length in the X direction), depth, and the like of the escape grooves 564 may be set depending on the purpose or the like of use of the base material 300 and/or the seal member 172. For example, the side lips 174 may be provided at locations where it is desired to suppress the occurrence of burrs, for example, only in the vicinity of the uneven portion 330 of the base material 300, and in this case, the start position and end position of the side lips 174 in the Y direction may be set to positions avoiding the protrusions 332. Incidentally, the start position and end position of the side lips 174 in the Y direction may be provided on the protrusions 332.

Figs. 6(c) and 6(d) are views showing other examples of the cavity plate and the mold. The mold (lower mold) of the second embodiment has the same configuration as the mold 420 having the flat surface 422 shown in Fig. 5(b) of the first embodiment. However, as shown in Fig. 6(c), in the cross-section E-E, a surface 512a of a cavity plate 510a facing the recesses 334 of the base material 300 may be made flat (flat surface), and a mold 520a may include pressing portions 522 that press the protrusions 332 of the base material 300. Incidentally, similarly to the clearances Sp3 in Fig. 5(b) of the first embodiment, predetermined clearances in the Y direction are provided between the pressing portions 522 and the protrusions 332.

Further, as shown in Fig. 6(d), a surface 512b of a cavity plate 510b facing the recesses 334 may be made flat (flat surface), and a surface 522b of a mold 520b facing the protrusions 332 may also be made flat (flat surface). As described above, when a cross-section substantially orthogonal to the X direction is viewed, the configuration may be such that at least one of the cavity plate and the mold has a flat surface facing the uneven portion of the base material.

In the second embodiment, since the configuration is such that the side lips 174 are provided, the occurrence of burrs can be controlled by the side lips 174. For this reason, even in the vicinities of the side lips 174, even when gaps occur between the cavity plate and the base material 300 as in the cavity plate 510a or the cavity plate 510b, the flow of the rubber material 150 into the gaps can be suppressed. In addition, the cavity plate 510a and the mold 520a or the cavity plate 510b and the mold 520b in Figs. 6(c) and 6(d) can also be applied to the configuration of the first embodiment in which the side lip 174 is not provided. Incidentally, in the first embodiment, there is no side lip 174 that controls the occurrence of burrs. For this reason, when the surface of the cavity plate is made flat, the surface may be made flat when viewed in a cross-section substantially orthogonal to the X direction at a position separated by a predetermined distance (for example, 1 mm to 2 mm) from an end portion of the seal member 172 in the X direction.

As described above, since no injection pressure is applied in the vulcanization molding step by using the molding method of the second embodiment, at least a part of the uneven portion does not need to be suppressed by the cavity plate and/or the mold, so that a flat surface can be used. Accordingly, scratches due to friction do not occur in the base material 300, and the base material 300 is not distorted by a pressing force.

### <Modification example of base material: bulk shape>

Fig. 7(a) is a view showing a modification example of the base material of the first and second embodiments, and Fig. 7(b) is a cross-sectional view of main parts showing one example of a cavity plate and molds corresponding to a cross-section F-F in Fig. 7(a). For example, Fig. 7(a) is a perspective view of main parts showing a base material 600 (bulk-shaped base material) including an uneven portion. Incidentally, in Fig. 7(a), the seal member 172 and the side lips 176 are shown by dashed lines to make the drawing easier to read. In addition, some of the reference signs of the side lips 176 are omitted. In addition, the up-down direction, the X direction, and the Y direction are indicated by double-headed arrows. The base material 600 has a surface 610 and a surface 620. Here, the surface 610 is a surface onto which the seal member 172 is molded, and the surface 620 is a surface onto which the seal member is not molded, and is a surface opposite to the surface 610. The surface 620 is not provided with an uneven portion, and the surface 620 is a substantially flat surface. In the following description, the up-down direction or recesses and protrusions are defined in a state where the base material 600 is disposed such that the surface 620 is located on the lower side and the surface 610 is located on the upper side.

The base material 600 includes, for example, four protrusions 632 and three recesses 634, and the protrusions 632 and the recesses 634 are consecutively and alternately provided. Hereinafter, a direction parallel to a longitudinal direction of the protrusions 632 and the recesses 634 is the X direction, and a direction substantially orthogonal to the X direction is the Y direction. It is assumed that the base material 600 actually extends in the X direction and the Y direction. The recesses 634 of the base material 600 may be used as flow paths for gas or liquid, and the gas or liquid may flow on a surface 610 side. The seal member 172 can molded onto the base material 600 having such a shape by the methods of the first embodiment and the second embodiment.

Fig. 7(b) is a view showing a cavity plate 510c that is a first mold and a mold 520c that is a second mold, which are used in the vulcanization molding step, in the cross-section F-F in Fig. 7(a). Since the surface 620 of the base material 600 is a flat surface, the mold 520c is also flat. On the other hand, the cavity plate 510c does not include pressing portions, a surface of the cavity plate 510c facing the protrusions 632 and the recesses 634 of the base material 600 is a flat surface, and the cavity plate 510c has the same configuration as described in Fig. 6(d). Incidentally, the cavity plate may include pressing portions corresponding to the pressing portions 412 as in the cavity plate 410 in Fig. 5(b).

### <Modification example of base material: hollow shape>

Fig. 8(a) is a perspective view of main parts showing a base material 700 including an uneven portion. Incidentally, in Fig. 8(a), the seal members 172 and 182 and the side lips 176 are shown by dashed lines to make the drawing easier to read. In addition, some of the reference signs of the side lips 176 are omitted. In addition, the up-down direction, the X direction, and the Y direction are indicated by double-headed arrows. The base material 700 is a base material in which a base material 710 and a base material 720 having substantially the same shape are pasted together to form hollow tubes. Here, the seal member 172 is molded onto the base material 710, and the seal member 182 is molded onto the base material 720. Namely, the seal members 172 and 182 are formed onto both surfaces of the base material 700 in Fig. 8(a). Incidentally, side lips (not shown) are also formed on a base material 720 side. Therefore, in the base materials 300 and 600, the cavity plates 410, 510, 510a, and 510b are paired with the respective molds 420, 520a, and 520b to sandwich the base materials 300 and 600 therebetween, whereas the base material 700 in Fig. 8(a) is sandwiched between a cavity plate 510d and a cavity plate 510e (refer to Fig. 8(b)). Namely, both the first mold and the second mold are cavity plates including grooves into which a raw material for the seal member is injected.

The base material 710 includes protrusions 732 and recesses 734, and the base material 720 includes protrusions 742 and recesses 744. The protrusions 732 of the base material 710 and the protrusions 742 of the base material 720 form hollow tubes.

The base material 700 includes, for example, four sets of protrusions 732 and 742 and three sets of the recesses 734 and 744, and the protrusions 732 and 742 and the recesses 734 and 744 are consecutively and alternately provided. Hereinafter, a direction parallel to a longitudinal direction of the protrusions 732 and 742 and the recesses 734 and 744 is the X direction, and a direction substantially orthogonal to the X direction is the Y direction. It is assumed that the base material 700 actually extends in the X direction and the Y direction. The tubes formed by the protrusions 732 of the base material 710 and the protrusions 742 of the base material 720 may be used as flow paths for gas or liquid. Even for the base material 700 having such a shape, since no injection pressure is applied in the vulcanization molding step, the tubes are not crushed, and the seal members 172 and 182 can be molded by the methods of the first embodiment and the second embodiment.

Fig. 8(b) is a view showing the cavity plate 510d that is a first mold and the cavity plate 510e that is a second mold, which are used in the vulcanization molding step, in a cross-section G-G in Fig. 8(a). For example, the cavity plate 510d does not include pressing portions, and a surface of the cavity plate 510d facing the protrusions 732 and the recesses 734 of the base material 700 is a flat surface. On the other hand, the cavity plate 510e includes pressing portions 512e that press the recesses 744 of the base material 720. Incidentally, the cavity plate 510d may include pressing portions and the cavity plate 510e may not include pressing portions, or both the cavity plate 510d and the cavity plate 510e may not include pressing portions.

In this manner, in the first embodiment and the second embodiment, at least the surface of the first mold and/or the second mold facing the recesses and the protrusions of the base material is a flat surface when viewed in a cross-section at a position separated by a predetermined distance from the molding position of the seal member 172 in the X direction substantially orthogonal to the Y direction in which the seal member 172 extends. For this reason, the seal member can be molded onto the base materials having various shapes.

As described above, according to the second embodiment, it is possible to provide the molding method capable of reducing damage or deformation of the base material when the seal member is molded in the direction intersecting the uneven portion of the base material.

### [Third Embodiment]

### <Regarding portions of base material other than uneven portion>

The presence or absence of pressing portions of a cavity plate will be described. Fig. 9(a) is a view showing the position of a cross-section of a base material, and Figs. 9(b) to 9(e) are views showing various combinations of cavity plates and molds. In Fig. 9, the base material 300 used in the description of the first embodiment is used as a base material; however, base materials having other shapes (for example, the base materials 600 and 700 and the like) may be used. In addition, the cavity plate 410 without an escape groove used in the description of the first embodiment is used as a cavity plate; however, the cavity plate including the escape grooves described in the second embodiment may be used. In addition, the up-down direction, the X direction, or the Y direction is also the same as in the first embodiment.

In a cross-section of the cavity plate 410, the base material 300, and the mold 420 corresponding to a cross-section B1-B1 in Fig. 9(a), as shown in Fig. 5(b), the cavity plate 410 includes the pressing portions 412 at portions facing the uneven portion 330 (here, the recesses 334) of the base material 300. The position of a cross-section B2-B2 in Fig. 9(a) is a position closer to the seal member 172 (the groove 462 of the cavity plate 410) than the position of the cross-section B1-B1, and the flow of the rubber material 150 into the clearances Sp3 (refer to Fig. 5) occurs, so that the pressing portions 412 need to be in contact with the base material 300.

On the other hand, the position of a cross-section B3-B3 in Fig. 9(a) is a position farther from the seal member 172 (the groove 462 of the cavity plate 410) than the position of the cross-section B1-B1, and is, for example, a position at a predetermined distance of 1 mm to 2 mm in the X direction described in the second embodiment. The position of the cross-section B3-B3 is sufficiently separated from the groove 462 of the cavity plate 410, and there is substantially no flow of the rubber material 150 into the clearances. For this reason, the pressing portions 412 shown in Fig. 5(b) is unnecessary, and the cross-sectional shape of the cavity plate 410 at a position corresponding to the cross-section B3-B3 is the shape (flat) of the surface 512b of the cavity plate 510b shown in Fig. 9(b).

### <Regarding surface of cavity plate facing portions of base material other than uneven portion>

Up to now, the surface of the cavity plate facing the uneven portion 330 of the base material 300 has been described; however, a surface of the cavity plate facing portions of the base material 300 other than the uneven portion 330 will be described. As described in the second embodiment, since there is substantially no flow of the rubber material 150 at the position corresponding to the cross-section B3-B3 in Fig. 9(a), the cavity plate can have a structure in which the cavity plate is not in contact with the base material 300.

As shown in Fig. 9(b), the base material 300 includes portions 340 other than the uneven portion 330 at both end portions (the other end portion is omitted in the drawing) of the uneven portion 330 (portions excluding the uneven portion 330). In the above-described embodiment, for example, the cavity plate 510b includes a pressing portions 514b facing the portions 340 of the base material 300, and the pressing portions 514b are in contact with the portions 340 of the base material 300. Incidentally, Fig. 9(b) is a view similar to Fig. 6(d), and the same reference signs are assigned to the same configurations.

However, as shown in Fig. 9(c), in a cross-section corresponding to the cross-section B3-B3, a cavity plate 510f has a surface 512f and a surface 514f. Here, the surface 512f is a surface facing the uneven portion 330 of the base material 300 and in contact with the protrusions 332. The surface 514f is a surface facing the portions 340 of the base material 300 and not in contact with the portions 340 of the base material 300. Namely, the surface 512f and the surface 514f of the cavity plate 510f are continuous flat surfaces. In addition, in a mold 520f, a surface 522f is flat and in contact with the portions 340 and the recesses 334 of the base material 300. In this manner, a combination of the cavity plate 510f and the mold 520f may be used.

In addition, as shown in Fig. 9(d), in a cross-section corresponding to the cross-section B3-B3, a cavity plate 510g has a surface 512g and a surface 514g. Here, the surface 512g is a surface facing the uneven portion 330 of the base material 300 and not in contact with the uneven portion 330. The surface 514g is a surface facing the portions 340 of the base material 300 and in contact with the portions 340 of the base material 300. In addition, in a mold 520g, a surface 522g is flat and not in contact with the portions 340 and the uneven portion 330 of the base material 300. In this manner, a combination of the cavity plate 510g and the mold 520g may be used.

Further, as shown in Fig. 9(e), in a cross-section corresponding to the cross-section B3-B3, a cavity plate 510h has a surface 512h and a surface 514h. Here, the surface 512h is a surface facing the uneven portion 330 of the base material 300 and not in contact with the uneven portion 330. The surface 514h is a surface facing the portions 340 of the base material 300 and not in contact with the portions 340 of the base material 300. Namely, the surface 512h and the surface 514h of the cavity plate 510h are continuous flat surfaces. In addition, in a mold 520h, a surface 522h is flat and not in contact with the portions 340 and the uneven portion 330 of the base material 300. In this manner, a combination of the cavity plate 510h and the mold 520h may be used.

Various combinations of the presence or absence of the pressing portions of the cavity plate and the presence or absence of the pressing portions of the mold can be adopted. In addition, when the configuration is such that the cavity plate and/or the mold has a flat surface without pressing portions, various combinations in which the cavity plate and/or the mold is in contact with the base material or is not in contact with the base material can be adopted. Further, regarding the shape of the base material, the base material may include an uneven portion, and the above-described combinations of the cavity plates and the molds can be applied to base materials with various structures including an uneven portion, such as the base material 300 described in the first embodiment or the base materials 600 and 700 described in the second embodiment.

As described above, according to the third embodiment, it is possible to provide the molding method capable of reducing damage or deformation of the base material when the seal member is molded in the direction intersecting the uneven portion of the base material.

The preferred embodiments of the present invention have been described above; however, the present invention is not limited thereto, and various modifications or changes can be made without departing from the concept of the present invention.

In the above-described embodiment, the surface 320 has been described as a surface onto which the seal member 172 is not molded; however, the seal member 172 may also be molded onto the surface 320. In the molding method of the present embodiment, since no injection pressure is not applied in the vulcanization molding step, the injection pressure is not applied to the uneven portion 330 of the base material 300, and the seal member 172 can be molded without damaging the shape of the uneven portion 330.

In the above-described embodiment, the base material 300 includes a plurality of the recesses 334 and the protrusions 332; however, the base material 300 may include at least one recess 334 or protrusion 332, and can be applied as long as the base material 300 is formed such that the seal member 172 intersects the at least one recess 334 or protrusion 332.

In the above-described embodiments, the flat surfaces 422, 512a, 512b, and 522b of the cavity plates and/or the molds are in contact with the base material 300 and the like, but may not be in contact therewith. The reason is that the injection pressure is not applied in the vulcanization molding step and the rubber material 150 does not flow into the gaps.

Further, the surfaces 512a, 512b, 512f, 512g, 514f, 514h, and the like of the cavity plates, and the surfaces 422, 522b, 522f, 522g, 522h, and the like of the molds have a planar shape in which these surfaces are partially or entirely in contact with the base material 300, but are not limited to a planar shape. These surfaces may have another shape such as a curved shape having a predetermined radius of curvature, a stepped shape including steps (bellows shape), or a tapered shape, and these surfaces may have, for example, a predetermined structure such as a hole.

In addition, for example, the present invention includes the following concepts.

### [Concept 1]

A molding method of the present invention is a molding method for molding a seal member onto a base material including a recess and a protrusion such that the recess or the protrusion and the seal member intersect each other when the seal member is molded onto the base material, the method including: a first step of injecting a raw material for the seal member into a groove at a temperature where the raw material is not crosslinked, in a first mold including the groove into which the raw material is injected; and a second step of sandwiching the base material between the first mold in which the raw material is injected into the groove and a second mold, and molding the raw material onto the base material as the seal member at a temperature where the raw material is crosslinked. At least a surface of the first mold and/or the second mold facing the recess and the protrusion is a flat surface when viewed in a cross-section at a position separated by a predetermined distance from a molding position of the seal member in a second direction substantially orthogonal to a first direction in which the seal member extends.

### [Concept 2]

A molding method of the present invention is a molding method for molding a seal member onto a base material including a recess and a protrusion such that the recess or the protrusion and the seal member intersect each other when the seal member is molded onto the base material, the method including: a first step of injecting a raw material for the seal member into a groove at a temperature where the raw material is not crosslinked, in a first mold including the groove into which the raw material is injected; and a second step of sandwiching the base material between the first mold in which the raw material is injected into the groove and a second mold, and molding the raw material onto the base material as the seal member at a temperature where the raw material is crosslinked. At least a surface of the first mold and/or the second mold facing the recess and the protrusion is not in contact with the base material when viewed in a cross-section at a position separated by a predetermined distance from a molding position of the seal member in a second direction substantially orthogonal to a first direction in which the seal member extends.

### [Concept 3]

The first mold may include a pressing portion that creates a gap between the first mold and the recess or the protrusion of the base material when the recess or the protrusion of the base material is pressed in the second step. A surface of the second mold facing the base material may be a flat surface.

### [Concept 4]

The first mold may include an escape groove in the vicinity of the groove and spaced apart from the groove.

### [Concept 5]

The first mold may include a connecting groove connecting the groove and the escape groove.

### [Concept 6]

The second mold may include a groove into which the raw material for the seal member is injected. In the first step, the raw material may be injected into the groove of the second mold at the temperature where the raw material is not crosslinked. In the second step, the base material may be sandwiched between the first mold and the second mold, and the seal member may be molded onto both surfaces of the base material.

### [Concept 7]

Each of the first mold and the second mold may include an escape groove in the vicinity of the groove and spaced apart from the groove.

### [Concept 8]

Each of the first mold and the second mold may include a connecting groove connecting the groove and the escape groove.

### [Concept 9]

The base material may include a portion excluding the recess and the protrusion. A surface of the first mold and/or the second mold facing the portion excluding the recess and the protrusion may be a flat surface when viewed in the cross-section at the position separated by the predetermined distance in the second direction.

### [Concept 10]

The base material may be metal, resin, or paper.

### [Concept 11]

The raw material may be rubber.

### REFERENCE SIGNS LIST

100: forming machine
200, 1000: molding machine
110, 112, 210, 212, 1010, 1012: heating plate
120, 130, 222, 420, 910, 920, 1020, 1032: mold
122, 1022: pot
124, 1024: gate
133, 1033: recess
140, 300, 600, 700, 710, 720, 1040: base material
142, 144, 310, 320, 422, 512a, 512b, 522b: surface
150, 1050: rubber material
160, 410: cavity plate
162, 462, 562, 1026: groove
164, 564: escape groove
166: connecting groove
168: touch surface
172, 182: seal member
174, 176: side lip
180: plate
330: uneven portion
332, 632, 732, 742: protrusion
334, 634, 734, 744: recess
340: portion other than uneven portion
412, 512e, 522, 912, 922: pressing portion
510, 510a, 510b, 510c, 510d, 510c: cavity plate
510d, 510e, 510f, 510g, 510h: cavity plate
512b, 512f, 512g, 512h: surface
514b, 514f, 514g, 514h: surface
520a, 520b, 520c: mold
520d, 520e, 520f, 520g, 520h: mold
522b, 522f, 522g, 522h: surface
900: burr
Sp1, Sp2, Sp3: clearance

## Claims

1. A molding method for molding a seal member onto a base material including a recess and a protrusion such that the recess or the protrusion and the seal member intersect each other when the seal member is molded onto the base material, the method comprising:
a first step of injecting a raw material for the seal member into a groove at a temperature where the raw material is not crosslinked, in a first mold including the groove into which the raw material is injected; and
a second step of sandwiching the base material between the first mold in which the raw material is injected into the groove and a second mold, and molding the raw material onto the base material as the seal member at a temperature where the raw material is crosslinked,
wherein at least a surface of the first mold and/or the second mold facing the recess and the protrusion is a flat surface when viewed in a cross-section at a position separated by a predetermined distance from a molding position of the seal member in a second direction substantially orthogonal to a first direction in which the seal member extends.

2. A molding method for molding a seal member onto a base material including a recess and a protrusion such that the recess or the protrusion and the seal member intersect each other when the seal member is molded onto the base material, the method comprising:
a first step of injecting a raw material for the seal member into a groove at a temperature where the raw material is not crosslinked, in a first mold including the groove into which the raw material is injected; and
a second step of sandwiching the base material between the first mold in which the raw material is injected into the groove and a second mold, and molding the raw material onto the base material as the seal member at a temperature where the raw material is crosslinked,
wherein at least a surface of the first mold and/or the second mold facing the recess and the protrusion is not in contact with the base material when viewed in a cross-section at a position separated by a predetermined distance from a molding position of the seal member in a second direction substantially orthogonal to a first direction in which the seal member extends.

3. The molding method according to claim 1 or 2,
wherein the first mold includes a pressing portion that creates a gap between the first mold and the recess or the protrusion of the base material when the recess or the protrusion of the base material is pressed in the second step, and
a surface of the second mold facing the base material is a flat surface.

4. The molding method according to claim 3,
wherein the first mold includes an escape groove in the vicinity of the groove and spaced apart from the groove.

5. The molding method according to claim 4,
wherein the first mold includes a connecting groove connecting the groove and the escape groove.

6. The molding method according to claim 2,
wherein the second mold includes a groove into which the raw material for the seal member is injected,
in the first step, the raw material is injected into the groove of the second mold at the temperature where the raw material is not crosslinked, and
in the second step, the base material is sandwiched between the first mold and the second mold, and the seal member is molded onto both surfaces of the base material.

7. The molding method according to claim 6,
wherein each of the first mold and the second mold includes an escape groove in the vicinity of the groove and spaced apart from the groove.

8. The molding method according to claim 7,
wherein each of the first mold and the second mold includes a connecting groove connecting the groove and the escape groove.

9. The molding method according to any one of claims 1 to 8,
wherein the base material includes a portion excluding the recess and the protrusion, and
a surface of the first mold and/or the second mold facing the portion excluding the recess and the protrusion is a flat surface when viewed in the cross-section at the position separated by the predetermined distance in the second direction.

10. The molding method according to any one of claims 1 to 9,
wherein the base material is metal, resin, or paper.

11. The molding method according to any one of claims 1 to 10,
wherein the raw material is rubber.
